# EUROPÄISCHE PATENTSCHRIFT

(11) **EP 2 157 333 B1**
(45) Veröffentlichungstag und Bekanntmachung des Hinweises auf die Patenterteilung: **22.12.2010**
(21) Anmeldenummer: 09008649.7
(22) Anmeldetag: 02.07.2009
(51) Int. Cl.: F16F 15/124, F16F 13/04, F16C 3/02

(54) **Drehmomentübertragungseinrichtung, insbesondere Gelenkwelle**
Torque transfer device, especially jointed shaft
Dispositif de transmission de couple, notamment arbre de transmission

(30) Priorität: 22.08.2008 DE 102008039309
(43) Veröffentlichungstag der Anmeldung: 24.02.2010
(73) Patentinhaber: Bayerische Motoren Werke, 80809 München (DE)
(72) Erfinder: Mueller, Helmut, 84513 Töging (DE)
(74) Vertreter: Diener, Reinhold Jürgen

(56) Entgegenhaltungen:
- DE-A1- 2 950 938
- DE-A1-102004 016 365
- DE-A1-102007 034 983
- DE-A1-102007 044 887
- FR-A- 2 754 856
- US-A1- 2005 084 374

## Beschreibung

Die vorliegende Erfindung betrifft eine Drehmomentübertragungseinrichtung, insbesondere Gelenkwelle, gemäß dem Oberbegriff des Patentanspruches 1.

Eine derartige Drehmomentübertragungseinrichtung ist aus der DE 10 2004 016 365 A1 bekannt. Zum technischen Hintergrund der Erfindung zählen ferner die US 2005/0843741 sowie die FR-A-2754856.

Motorräder sind üblicherweise mit Getrieben ausgestattet, die eine Klauenschaltung aufweisen. Klauenschaltungen ermöglichen sehr schnelle Schaltvorgänge, weisen dafür im Vergleich zu synchronisierten Getrieben aber einen etwas geringeren Schaltkomfort auf. So tritt insbesondere beim Einlegen des ersten Ganges auch bei geöffneter Kupplung an der Getriebeausgangswelle ein gewisser Drehmomentstoß auf, der mit einem entsprechenden Geräusch verbunden ist. Bei Motorrädern mit Kardanantrieb pflanzt sich der Drehmomentstoß bzw. das Geräusch über die Gelenkwelle zum Hinterrad hin fort, was als störend empfunden werden kann.

Manche Motorräder sind daher mit einer "zweiteiligen" Gelenkwelle ausgestattet, die eine Hohlwelle und eine durch die Hohlwelle hindurch geführte innere Welle aufweist. Die innere Welle und die Hohlwelle sind über ein im Zwischenraum angeordnetes Gummipaket reibschlüssig miteinander verbunden. Das Gummipaket ist dazu vorgesehen, Drehmomentstöße zu dämpfen und den Motor bzw. das Getriebe vor Überlastung zu schützen.

Aufgabe der Erfindung ist es, eine Drehmomentübertragungseinrichtung, insbesondere eine Gelenkwelle zu schaffen, die einen hohen Fahrkomfort ermöglicht.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist eine Drehmomentübertragungseinrichtung, insbesondere eine Gelenkwelle, insbesondere für Motorräder, die einen äußeren, hohlwellenartigen "Wellenabschnitt" und einen inneren "Wellenabschnitt" aufweist.

Der äußere hohlwellenartige Wellenabschnitt weist radial nach innen abstehende zahnartige Elemente auf. Beispielsweise können zwei, drei, vier oder mehr nach innen radial abstehende zahnartige Elemente, die in Folgenden als "erste zahnartige Elemente" bezeichnet werden, vorgesehen sein. Der inneren Wellenabschnitt ragt zumindest mit einer gewissen Länge in den äußeren hohlwellenartigen Wellenabschnitt hinein und weist radial nach außen abstehende "zweite zahnartige Elemente" auf. Die zweiten zahnartigen Elemente ragen in Zwischenräume der ersten zahnartigen Elemente.

Der in Umfangsrichtung der Drehmomentübertragungseinrichtung betrachtete Zwischenraum zwischen jeweils zwei aufeinanderfolgenden ersten zahnartigen Elementen ist größer als die in Umfangsrichtung gemessene Breite der zweiten zahnartigen Elemente. Zwischen den ersten und den zweiten zahnartigen Elementen besteht also ein gewisses "Verdrehspiel", was in gewissem Umfang eine Relativdrehung des inneren Wellenabschnitts in Bezug auf den äußeren Wellenabschnitt ermöglicht.

Die Drehmomentübertragungseinrichtung weist ferner eine "Druckfederanordnung" auf, die eine auf den inneren und den äußeren Wellenabschnitt wirkende axiale Druckkraft erzeugt. Ferner ist eine Dämpfungseinrichtung, bei der es sich um eine Reibdämpfungseinrichtung handeln kann, vorgesehen, die, von der Druckkraft beaufschlagt, Relativdrehungen des inneren Wellenabschnitts in Bezug auf den äußeren Wellenabschnitt dämpft.

Wird die Gelenkwelle in einem Motorrad mit Kardanantrieb verbaut, so soll die Reibdämpfungseinrichtung insbesondere den beim Einlegen des ersten Ganges auftretenden Drehmomentstoß dämpfen.

Der Kern der Erfindung besteht darin, dass elastische Elemente vorgesehen sind, die zwischen den in einer Umfangsrichtung der Drehmomentübertragungseinrichtung aufeinanderfolgenden ersten und zweiten zahnartigen Elementen angeordnet sind. Die elastischen Elemente können zusätzlich dämpfende Eigenschaften haben. Bei einer Relativdrehung des inneren Wellenabschnitts in Bezug den äußeren Wellenabschnitt ergibt sich somit eine in beide Drehrichtungen progressive Kennlinie, die aufgrund der Reibungsdämpfungseinrichtung und eventueller zusätzlicher Dämpfungseigenschaften der elastischen Elemente eine gewisse Hysterese, d. h. eine gewisse Dämpfung aufweist.

Die elastischen Elemente können gedanklich in erste und zweite elastische Elemente gegliedert werden. Bei einer Drehmomentübertragung in eine erste Drehrichtung werden primär die ersten elastischen Elemente auf Druck beansprucht und bei einer Drehmomentübertragung in eine zweite, der ersten Drehrichtung entgegen gesetzte Drehrichtung werden primär die zweiten elastischen Elemente auf Druck beansprucht. Die ersten elastischen Elemente können eine andere Feder-/Dämpfungskennlinie aufweisen, als die zweiten elastischen Elemente.

Die Feder-Dämpfungskennlinie der Drehmomentübertragungseinrichtung kann somit durch die geometrische Gestaltung der elastischen Elemente und/oder der zahnartigen Elemente sowie durch die Wahl der für die elastischen Elemente verwendeten Materialen gezielt "asymmetrisch", d.h. drehrichtungsabhängig konzipiert werden.

Nach einer Weiterbildung der Erfindung weist der innere Wellenabschnitt eine sich in Axialrichtung der Drehmomentübertragungseinrichtung erstreckende bohrungsartige Ausnehmung auf, in welche die Druckfederanordnung eingesetzt ist. Ein Ende der Druckfederanordnung kann dabei an einem "Grund" der Ausnehmung bzw. Bohrung oder an einem "Absatz" der bohrungsartigen Ausnehmung abgestützt sein.

Der äußere Wellenabschnitt weist vorzugsweise ein geschlossenes Ende auf. Die Reibdämpfungseinrichtung kann dann räumlich zwischen dem geschlossenen Ende des äußeren Wellenabschnitts und der Druckfederanordnung angeordnet sein.

Der innere Wellenabschnitt kann über Lager, in dem äußeren Wellenabschnitt gelagert sein. Es können beispielsweise zwei in Axialrichtung voneinander beabstandete Lager, vorzugsweise Wälzlager wie z. B. Kugellager vorgesehen sein.

Der äußere Wellenabschnitt und die radial nach innen abstehenden Elemente des äußeren Wellenabschnitts können einstückig miteinander verbunden sein. Insbesondere können der äußere Wellenabschnitt und die radial nach innen abstehenden Elemente durch ein Strangpressprofil gebildet sein.

Es sei ausdrücklich darauf hingewiesen, dass die Erfindung sowohl die Drehmomentübertragungseinrichtung an sich als auch ein mit einer derartigen Drehmomentübertragungseinrichtung ausgestattetes Fahrzeug, insbesondere ein mit einer derartigen Drehmomentübertragungseinrichtung ausgestattetes Motorrad, umfasst.

Im Folgenden wird die Erfindung im Zusammenhang mit der Zeichnung näher erläutert. Es zeigen:
- Figur 1: einen Querschnitt durch eine Drehmomentübertragungs- einrichtung gemäß der Erfindung; und
- Figur 2: einen Axialschnitt durch eine Drehmomentübertragungsein- richtung gemäß der Erfindung.

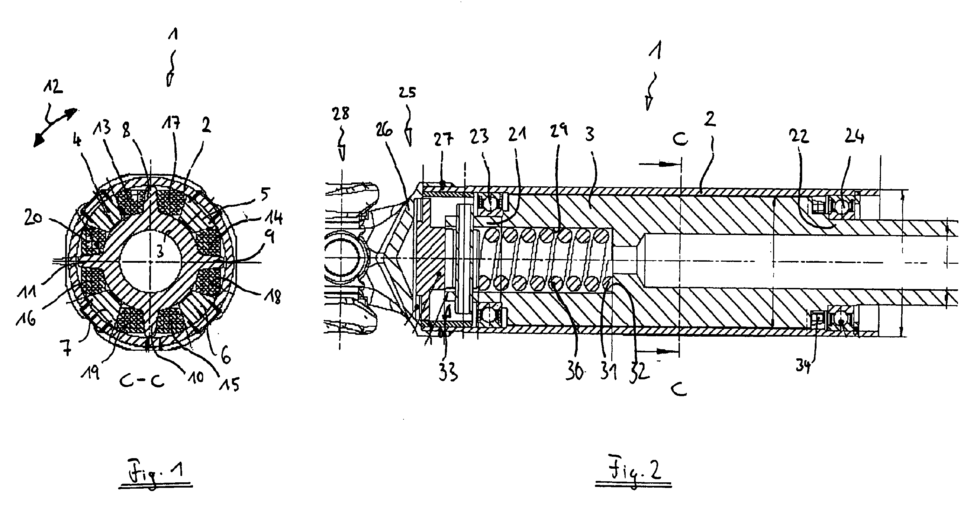

Die Figuren 1 und 2 zeigen eine Drehmomentübertragungseinrichtung 1, die ein Rohr 2, das auch als äußerer, hohlwellenartiger "Wellenabschnitt" bezeichnet werden kann, aufweist, und ein inneres Rohr 3, das als innerer "Wellenabschnitt" bezeichnet wird.

Wie aus Figur 1 ersichtlich ist, weist das äußere Rohr 2 erste, radial nach innen abstehende zahnartige Elemente 4, 5, 6, 7 auf. Es müssen nicht notwendigerweise vier zahnartige Elemente vorgesehen sein, es können auch zwei, drei, fünf oder mehr derartige zahnartige Elemente vorgesehen sein.

Das innere Rohr 3 weist zweite, radial nach außen stehende zahnartige Elemente 8, 9, 10, 11 auf, die in Zahnzwischenräume zwischen jeweils zwei erste zahnartige Elemente 4, 5 bzw. 5, 6 bzw. 6, 7 bzw. 7, 4, ragen.

Wie aus Figur 1 ersichtlich ist, sind die in einer Umfangsrichtung 12 der Drehmomentübertragungseinrichtung 1 betrachteten Zwischenräume zwischen den ersten zahnartigen Elementen 4, 5 bzw. 5, 6 bzw. 6, 7 bzw. 7, 4 größer als die in Umfangsrichtung 12 gemessene Breite der zweiten zahnartigen Elemente 8 - 11, was in gewissem Umfang eine Relativdrehung des inneren Rohrs 3 in Bezug auf das äußere Rohr 2 ermöglicht.

Bei dem in Figur 1 gezeigten Ausführungsbeispiel sind die ersten zahnartigen Elemente in entsprechende Ausnehmungen des äußeren Rohrs 2 eingesetzt. Die ersten zahnartigen Elemente 4 - 7 können beispielsweise mit dem äußeren Rohr verschweißt sein.

Alternativ dazu können die ersten zahnartigen Elemente auch einstückig mit dem äußeren Rohr verbunden sein. Beispielsweise ist denkbar, dass das äußere Rohr zusammen mit den ersten zahnartigen Elementen durch ein entsprechend geformtes Strangpressprofil gebildet ist.

Zwischen den ersten und zweiten zahnartigen Elementen 4 - 7 bzw. 8 - 11 sind jeweils elastische Elemente angeordnet, die im Folgenden als erste elastische Elemente 13 - 16 bzw. als zweite elastische Elemente 17 - 20 bezeichnet werden.

Bei einer Drehmomentübertragung in die eine Umfangsrichtung werden primär die ersten elastischen Elemente 13 - 16 auf Druck beansprucht. Bei einer Drehmomentübertragung in die andere Umfangsrichtung werden primär die zweiten elastischen Elemente 17 - 20 auf Druck beansprucht. Die ersten elastischen Elemente 13 - 16 können eine andere Feder-/Dämpfungscharakteristik aufweisen als die zweiten elastischen Elemente 17 - 20.

Wie aus Figur 2 ersichtlich ist, ragt das innere Rohr 3 in das äußere Rohr 2 hinein. Das innere Rohr 3 weist einen ersten Wellenabsatz 21 und einen zweiten Wellenabsatz 22 auf. Auf dem ersten Wellenabsatz 21 ist ein erstes Kugellager 23 und auf dem zweiten Wellenabsatz 22 ist ein zweites Kugellager 24 angeordnet. Über die beiden Kugellager 23, 24 ist das innere Rohr 3 in dem äußeren Rohr 2 drehbar gelagert, wobei der mögliche Relativdrehwinkel durch die zahnartigen Elemente 4 - 11 und die elastischen Elemente 13 - 20 begrenzt ist.

Wie aus Figur 2 ersichtlich ist, weist das äußere Rohr 2 ein geschlossenes Ende 25 auf. Hierzu ist ein kappenartiges Element 26 über eine Schweißnaht 27 mit dem äußeren Rohr 2 verschweißt. An das kappenartige Element 26 schließt sich ein hier nur teilweise dargestelltes Kardangelenk 28 an.

Wie aus Figur 2 ersichtlich ist, weist das innere Rohr 3 eine bohrungsartige Ausnehmung 29 auf, in die eine Spiralfeder 30 eingesetzt ist, deren eines Ende 31 sich an einem Absatz 32 der bohrungsartigen Ausnehmung 29 abstützt. Das andere hier nicht näher dargestellte Ende der Spiralfeder 30 drückt gegen eine Reibscheibenanordnung 33, die als "Reibdämpfer" fungiert. Auf der der Spiralfeder 30 gegenüberliegenden Seite der Reibscheibenanordnung 33 wird die von der Spiralfeder 30 auf die Reibscheibenanordnung 33 ausgeübte Druckkraft durch das geschlossene Ende 25 bzw. durch das kappenartige Element 26 des äußeren Rohrs 2 abgestützt.

Bei Drehstößen bzw. Drehmomentschwingungen in der Drehmomentübertragungseinrichtung 1 werden eventuelle Relativdrehungen des inneren Rohrs 3 in Bezug auf das äußere Rohr 2 durch die Reibscheibenanordnung 33 gedämpft. Alternativ zu der in Figur 2 gezeigten Spiralfeder kann auch eine andere "Druckkrafterzeugungseinrichtung", wie z. B. ein Tellerfederpaket o. ä. verwendet werden.

Vollständigkeitshalber sei noch eine Dichtung 34 erwähnt, welche im Bereich des zweiten Kugellagers 24 angeordnet ist. Die Dichtung 34 dichtet das innere Rohr 3 gegenüber dem äußeren Rohr 2 ab.

## Patentansprüche

1. Drehmomentübertragungseinrichtung (1), insbesondere Gelenkwelle, mit
- einem äußeren, hohlwellenartigen Wellenabschnitt (2), der radial nach innen abstehende erste zahnartige Elemente (4 - 7) aufweist,
- einem inneren Wellenabschnitt (3) , der in den äußeren hohlwellenartigen Wellenabschnitt (2) ragt und der radial nach außen abstehende zweite zahnartige Elemente (8 - 11) aufweist, welche in Zwischenräume zwischen den ersten zahnartigen Elementen (4 - 7) ragen, wobei in einer Umfangsrichtung (12) der Drehmomentübertragungseinrichtung (1) die Zwischenräume zwischen den ersten zahnartigen Elementen (4 - 7) größer sind als die in Umfangsrichtung gemessene Breite der zweiten zahnartigen Elemente (8 - 11), so dass, in gewissem Umfang, eine Relativdrehung des inneren Wellenabschnitts (3) in Bezug auf den äußeren Wellenabschnitt (2) ermöglicht wird,
- einer Druckfederanordnung (30), die eine auf den inneren und den äußeren Wellenabschnitt (3, 2) wirkende axiale Druckkraft erzeugt, und
- einer Reibdämpfungseinrichtung, die, von der Druckkraft beaufschlagt, Relativdrehungen des inneren Wellenabschnitts (3) in Bezug auf den äußeren Wellenabschnitt (2) dämpft,
**dadurch gekennzeichnet,**
- **dass** die Drehmomentübertragungseinrichtung (1) zum Einbau in ein Motorrad vorgesehen ist und
- **dass** elastische Elemente (13 - 20) vorgesehen sind, die zwischen den in Umfangsrichtung (12) der Drehmomentübertragungseinrichtung (1) aufeinander folgenden ersten und zweiten zahnartigen Elementen (13 - 16; 17 - 20) angeordnet sind.

2. Drehmomentübertragungseinrichtung (1) nach Anspruch 1, **dadurch gekennzeichnet, dass** die elastischen Elemente erste elastische Elemente (13 - 16) aufweisen, die primär bei einer Drehmomentübertragung in eine erste Drehrichtung der Drehmomentübertragungseinrichtung (1) auf Druck beansprucht werden, und zweite elastische Elemente (17 - 20) die primär bei einer Drehmomentübertragung in eine der ersten Richtung entgegen gesetzte zweite Richtung auf Druck beansprucht werden, wobei die ersten elastischen Elemente (13 - 16) eine andere Feder- und oder Dämpfungskennlinie aufweisen, als die zweiten elastischen Elemente (17 - 20).

3. Drehmomentübertragungseinrichtung (1) nach einem der Ansprüche 1 oder 2, **dadurch gekennzeichnet, dass** der innere Wellenabschnitt (3) eine sich in Axialrichtung der Drehmomentübertragungseinrichtung (1) erstreckende bohrungsartige Ausnehmung (29) aufweist, in welche die Druckfederanordnung (30) eingesetzt ist.

4. Drehmomentübertragungseinrichtung (1) nach Anspruch 3, **dadurch gekennzeichnet, dass** ein Ende (31) der Druckfederanordnung (30) an einem Grund oder an einem Absatz (32) der bohrungsartigen Ausnehmung (29) abgestützt ist.

5. Drehmomentübertragungseinrichtung (1) nach einem der Ansprüche 1 bis 4, **dadurch gekennzeichnet, dass** der äußere Wellenabschnitt (2) ein geschlossenes Ende (25) aufweist, und dass die Reibdämpfungseinrichtung (33) zwischen dem geschlossenen Ende (25) des äußeren Wellenabschnitts (2) und der Druckfederanordnung (30) angeordnet ist.

6. Drehmomentübertragungseinrichtung (1) nach einem der Ansprüche 1 bis 5, **dadurch gekennzeichnet, dass** der innere Wellenabschnitt (3) über Lager (23, 24), in dem äußeren Wellenabschnitt (2) gelagert ist.

7. Drehmomentübertragungseinrichtung (1) nach Anspruch 6, **dadurch gekennzeichnet, dass** es sich bei mindestens einem der Lager (23, 24) um Wälzlager handelt.

8. Drehmomentübertragungseinrichtung (1) nach einem der Ansprüche 6 oder 7, **dadurch gekennzeichnet, dass** der innere Wellenabschnitt (3) über genau zwei Lager (23, 24) in dem äußeren Wellenabschnitt (2) gelagert ist.

9. Drehmomentübertragungseinrichtung (1) nach Anspruch 8, **dadurch gekennzeichnet, dass** es sich bei den beiden Lagern um Kugellager handelt.

10. Drehmomentübertragungseinrichtung (1) nach einem der Ansprüche 1 bis 9, **dadurch gekennzeichnet, dass** der äußere Wellenabschnitt (2) und die radial nach innen abstehenden Elemente (4 - 7) einstückig miteinander verbunden sind.

11. Drehmomentübertragungseinrichtung (1) nach Anspruch 10, **dadurch gekennzeichnet, dass** der äußere Wellenabschnitt (2) und die radial nach innen abstehenden Elemente (4 - 7) durch ein Strangpressprofil gebildet sind.

## Claims

1. A torque transmission device (1), in particular a jointed shaft, comprising
- an outer, hollow shaft-like shaft portion (2), which has radially inwardly projecting first tooth-like elements (4 to 7),
- an inner shaft portion (3), which projects into the outer hollow shaft-like shaft portion (2) and which has radially outwardly projecting second tooth-like elements (8 to 11), which project into interspaces between the first tooth-like elements (4 to 7), wherein, in a peripheral direction (12) of the torque transmission device (1), the interspaces between the first tooth-like elements (4 to 7) are greater than the width of the second tooth-like elements (8 to 11) measured in the peripheral direction, so that, to a certain extent, a relative rotation of the inner shaft portion (3) in relation to the outer shaft portion (2) is made possible,
- a compression spring arrangement (30), which produces an axial pressure acting on the inner and the outer shaft portion (3, 2), and
- a friction damping device which, acted upon by the pressure, damps relative rotations of the inner shaft portion (3) in relation to the outer shaft portion (2),
**characterised in that**
- the torque transmission device (1) is provided for installation in a motorcycle and
- **in that** resilient elements (13 to 20) are provided, which are arranged between the first and second tooth-like elements (13 to 16; 17 to 20) following one another in the peripheral direction (12) of the torque transmission device (1).

2. A torque transmission device (1) according to claim 1, **characterised in that** the resilient elements have first resilient elements (13 to 16), which are primarily subjected to compressive stress during a torque transmission in a first direction of rotation of the torque transmission device (1), and second resilient elements (17 to 20), which are primarily subjected to compressive stress during a torque transmission in a second direction opposing the first direction, the first resilient elements (13 to 16) having a different spring and/or damping characteristic than the second resilient elements (17 to 20).

3. A torque transmission device (1) according to either of claims 1 or 2, **characterised in that** the inner shaft portion (3) has a bore-like recess (29) which extends in the axial direction of the torque transmission device (1) and in which the compression spring arrangement (30) is inserted.

4. A torque transmission device (1) according to claim 3, **characterised in that** one end (31) of the compression spring arrangement (30) is supported on a base or on a shoulder (32) of the bore-like recess (29).

5. A torque transmission device (1) according to any one of claims 1 to 4, **characterised in that** the outer shaft portion (2) has a closed end (25), and **in that** the friction damping device (33) is arranged between the closed end (25) of the outer shaft portion (2) and the compression spring arrangement (30).

6. A torque transmission device (1) according to any one of claims 1 to 5, **characterised in that** the inner shaft portion (3) is mounted by means of bearings (23, 24) in the outer shaft portion (2).

7. A torque transmission device (1) according to claim 6, **characterised in that** at least one of the bearings (23, 24) is a roller bearing.

8. A torque transmission device (1) according to either of claims 6 or 7, **characterised in that** the inner shaft portion (3) is mounted by precisely two bearings (23, 24) in the outer shaft portion (2).

9. A torque transmission device (1) according to claim 8, **characterised in that** the two bearings are ball bearings.

10. A torque transmission device (1) according to any one of claims 1 to 9, **characterised in that** the outer shaft portion (2) and the radially inwardly projecting elements (4 to 7) are connected to one another in one piece.

11. A torque transmission device (1) according to claim 10, **characterised in that** the outer shaft portion (2) and the radially inwardly projecting elements (4 to 7) are formed by an extruded section.

## Revendications

1. Installation de transmission de couple (1), notamment arbre de transmission comprenant :
- un segment d'arbre (2), extérieur, en forme d'arbre creux, ayant des premiers éléments en forme de dents (4-7) en saillie radialement vers l'intérieur,
- un premier segment d'arbre (3) qui vient dans le segment d'arbre en forme d'arbre creux extérieur (2) et comporte des seconds éléments dentés (8-11) dirigés radialement vers l'extérieur, venant dans les espaces entre les premiers segments en forme de dents (4-7), si bien que dans la direction périphérique (12) de l'installation de transmission de couple (1), les espaces intermédiaires entre les premiers éléments (4-7) en forme de dents sont plus grands que la largeur des seconds éléments en forme de dents (8-11) mesurée dans la direction périphérique permettant un certain mouvement relatif du segment d'arbre intérieur (3) par rapport au segment d'arbre extérieur (2),
- un dispositif de ressort de compression (30) générant une poussée axiale agissant sur le segment d'arbre intérieur et le segment d'arbre extérieur (3, 2), et
- une installation d'amortissement par friction qui amortit les mouvements relatifs du segment d'arbre intérieur (3) par rapport au segment d'arbre extérieur (2), mouvement engendré par la poussée, installation **caractérisée en ce que**
- l'installation de transmission de couple (1) est destinée à être montée dans une moto, et
- des éléments élastiques (13-20) sont prévus entre les premiers et les seconds éléments en forme de dents (4-7; 8-11) qui se suivent dans la direction périphérique (12) de l'installation de transmission de couple (1).

2. Installation de transmission de couple (1) selon la revendication 1,
**caractérisée en ce que**
les éléments élastiques comportent des premiers éléments élastiques (13-16) qui sont sollicités principalement lors d'une transmission de couple dans un premier sens de rotation de l'installation de transmission de couple (1) en étant sollicités en pression et les seconds éléments élastiques (17-20) qui lors d'une transmission de couple, sont principalement sollicités en pression dans une seconde direction opposée à la première direction lors d'une transmission de couple, si bien que les premiers éléments élastiques (13-16) ont une autre courbe caractéristique de ressort ou d'amortissement que les seconds éléments élastiques (17-20).

3. Installation de transmission de couple (1) selon la revendication 1 ou 2,
**caractérisée en ce que**
le segment d'arbre intérieur (3) comporte une cavité (29) en forme de perçage s'étendant dans la direction axiale de l'installation de transmission de couple (1) et recevant le dispositif de ressort de compression (30).

4. Installation de transmission de couple (1) selon la revendication 3,
**caractérisée en ce qu'**
une extrémité (31) du dispositif de ressort de compression (30) est appuyée contre un fond ou contre un épaulement (32) de la cavité (29) en forme de perçage.

5. Installation de transmission de couple (1) selon l'une des revendications 1 à 4,
**caractérisée en ce que**
- le segment d'arbre extérieur (2) présente une extrémité fermée (25), et
- l'installation d'amortissement par friction (33) est installée entre l'extrémité fermée (25) du segment d'arbre extérieur (2) et le dispositif de ressort de compression (30).

6. Installation de transmission de couple (1) selon l'une des revendications 1 à 5,
**caractérisée en ce que**
le segment d'arbre intérieur (3) est monté par des paliers (23, 24) dans le segment d'arbre extérieur (2).

7. Installation de transmission de couple (1) selon la revendication 6,
**caractérisée en ce qu'**
au moins l'un des paliers (23, 24) est un palier à roulements.

8. Installation de transmission de couple (1) selon l'une des revendications 6 ou 7,
**caractérisée en ce que**
le segment d'arbre intérieur (3) est monté précisément par deux paliers (23, 24) dans le segment d'arbre extérieur (2).

9. Installation de transmission de couple (1) selon la revendication 8,
**caractérisée en ce que**
les deux paliers sont des paliers à billes.

10. Installation de transmission de couple (1) selon l'une des revendications 1 à 9,
**caractérisée en ce que**
le segment d'arbre extérieur (2) et les éléments (4-7) qui s'étendent radialement vers l'intérieur, sont réalisés en une seule pièce.

11. Installation de transmission de couple (1) selon la revendication 10,
**caractérisée en ce que**
le segment d'arbre extérieur (2) et les éléments (4-7) venant radialement en saillie vers l'intérieur, sont formés par un profilé extrudé à la presse.
